# NEUE EUROPÄISCHE PATENTSCHRIFT

(11) **EP 1 685 186 B2**
(45) Veröffentlichungstag und Bekanntmachung des Hinweises auf die Entscheidung über den Einspruch: **20.11.2013**
(45) Hinweis auf die Patenterteilung: 09.01.2008
(21) Anmeldenummer: 04765213.6
(22) Anmeldetag: 15.09.2004
(51) Int. Cl.: C08J 5/18, C08L 33/12, C08L 51/00, C08F 265/04, C08F 265/06, C08L 101/00, C08L 33/00

(54) **FORMMASSE, ENTHALTEND EIN MATTIERUNGSMITTEL**
MOLDING MATERIAL CONTAINING A MATTING AGENT
MATIERE A MOULER CONTENANT UN AGENT DE MATAGE

(30) Priorität: 20.11.2003 DE 10354379
(43) Veröffentlichungstag der Anmeldung: 02.08.2006
(73) Patentinhaber: Evonik Röhm GmbH, 64293 Darmstadt (DE)
(72) Erfinder: GOLDACKER, Thorsten, 64380 Rossdorf (DE); SPIESS, Andreas, 64807 Dieburg (DE); MÜLLER, Reiner, 64584 Biebesheim (DE); SCHULTES, Klaus, 65197 Wiesbaden (DE); NUMRICH, Uwe, 64846 Gro -Zimmern (DE)
(86) Internationale Anmeldenummer: PCT/EP2004/010299
(87) Internationale Veröffentlichungsnummer: WO 2005/052038

(56) Entgegenhaltungen:
- EP-A- 0 528 196
- WO-A1-97/14749
- US-A- 5 242 968
- US-B1- 6 476 148

## Beschreibung

Die Erfindung betrifft eine Formmasse, enthaltend ein Mattierungsmittel. Die Erfindung betrifft weiterhin aus der Formmasse hergestellte Formkörper sowie deren Verwendungen.

### Stand der Technik

EP 0 342 283 A1 beschreibt thermoplastische Polymerzusammensetzungen aus einem thermoplastischen Matrixpolymeren, enthaltend mehrschalige Mattierungsmittel mit einem Kern aus vernetztem Acrylatkautschuk sowie und einer äußeren Schale, die mit der Matrix kompatibel ist.

Mattierungsmittel gemäß EP 0 342 283 A1 haben einen vergleichsweise weichen Kern, der bewirkt, dass die Mattstruktur, die aus den aus der Oberfläche herausragenden Partikeln besteht, sehr weich ist und keine besonders gute Abriebfestigkeit aufweist. Außerdem kommt nachteiligerweise mit der Aufpolymerisation der Schale, die für die Matrixanbindung notwendig ist, ein weiterer Prozessschritt hinzu, der gerade bei den hier vorliegenden großen Latexpartikeln schwierig ist und häufig zur unerwünschten Teilchenneubildung führt. Die Kernteilchen selbst werden in der Patentanmeldung durch ein mehrstufiges Quellverfahren nach gemäß der US 4,186,120 hergestellt. Dabei diffundiert ein Monomer durch die Wasserphase in die Latexpartikel ein und quillt sie um ein vielfaches ihres ursprünglichen Volumens auf. Anschließend lässt man einen öllöslichen Initiator eindiffundieren und startet die Polymerisation. Nachteil dieses Verfahrens ist, dass man für eine signifikante Vergrößerung der Teilchen große Mengen Monomer benötigt, die in die Partikel diffundieren müssen. Dieser Prozess ist sehr langsam und in der Regel nicht vollständig, so dass das verbleibende Monomer bei der anschließenden Polymerisation zu erheblichen Koagulatmengen führt.

EP 0 528 196 A1 beschreibt mattierte Folien, die Mattierungsmittel aus einem thermoelastischen Polymerisaten, aufgebaut aus:
b1) 50 - 99,5 Gew.-% (bezogen auf B) eines, gegebenenfalls verzweigten oder cyclischen, C₁-C₆-Alkylmethacrylats
b2) 0,5 bis 10 Gew.-% eines vernetzenden Monomeren mit zwei oder mehr ethylenisch ungesättigten, radikalisch polymerisierbaren Gruppen, und
b3) gegebenenfalls weiteren ethylenisch ungesättigten, radikalisch polymerisierbaren Monomeren
enthalten können. Beispielsgemäß werden einer schlagzähmodifizierte Matrix aus Polymethylmethacrylat Mattierungsmittel mit ca. 3 µm Durchmesser aus gleichen Teilen Methylmethacrylat und Isobutylmethacrylat, die mit 5 % Glykoldimethacrylat vernetzt sind, zu 20 Gew.-% zugemischt. Für Folien, die beispielsgemäß nach der EP 0 528 196 A1 hergestellt wurden, sind Oberflächenrauheiten nach DIN 4768 von Rauheitswerte Rₐ = 0,3 µm, R_{z} = 1,7 µm und Rₘₐₓ = 2,2 µm angegeben.

Bei Formmassen, die gemäß der EP 0 528 196 A1 hergestellt wurden, wird eine vergleichsweise schlechte Thermostabilität bei der anschließenden thermoplastischen Verarbeitung beobachtet.

### Aufgabe und Lösung

Es besteht ein Bedarf an Formmassen, die zur Herstellung mattierter Formkörper, insbesondere Folien, geeignet sind.

Ausgehend von EP 0 342 283 A1 und EP 0 528 196 A1 wurde es als Aufgabe gesehen, eine Formmasse bereitzustellen, aus der sich mattierte Formkörper, insbesondere Folien, herstellen lassen, die sich durch eine seidenmatte Oberfläche mit angenehmer Haptik auszeichnen. Das Mattierungsmittel soll zudem vergleichsweise einfach aufgebaut und leicht herstellbar sein. Entsprechende Formmassen und die Abriebfestigkeit daraus hergestellter Formkörper nicht oder zumindest nicht wesentlich beeinträchtigen.

Die Aufgabe wird gelöst durch eine Formmasse, enthaltend
a) 50 bis 99,9 Gew.-% einer Matrix aus einem thermoplastischen Kunststoff und
b) 0,1 bis 50 Gew.-% eines in der Matrix verteilten Mattierungsmittels in Form eines (Meth)acrylatcopolymeren,
   dadurch gekennzeichnet, daß
   das Mattierungsmittel ein (Meth)acrylatcopolymer ist, das aus den folgenden Monomeren hergestellt ist:
   b1) 50 bis 95 Gew.-% Methylmethacrylat
   b2) 5 bis 50 Gew.-% C₁- bis C₆-Alkylacrylaten
   b3) 0,01 bis weniger als 0,5 Gew.-% eines vernetzenden Monomeren und/oder Pfropfvernetzers mit zwei oder mehr ethylenisch ungesättigten, radikalisch polymerisierbaren Resten,
   b4) 0 bis 20 Gew.-% eines oder mehrerer weiterer, nicht vernetzender ethylenisch ungesättigter, radikalisch polymerisierbarer Monomeren,
wobei sich die Bestandteile b1) und b2) sowie gegebenenfalls b3) und/oder b4) zu 100 Gew.-% addieren und das Mattierungsmittel eine Glasübergangstemperatur *T*_{mg} von mindestens 20 °C aufweist und wobei das Mattierungsmittel b) durch Emulsionspolymerisation hergestellt wurde und vor Einarbeitung in die Matrix einen mittleren Teilchenradius im Bereich von 100 nm bis 10 µm aufweist.

Die erfindungsgemäße Formmasse enthält ein vergleichsweise nur gering vernetztes Mattierungsmittel auf (Meth)acrylat-Basis. Das Mattierungsmittel wird bevorzugt ungeregelt hergestellt, so daß sein Molekulargewicht bereits im unvernetzten Zustand vergleichsweise hoch ist. Elektronenmikroskopische Bilder zeigen, daß das Mattierungsmittel in der Polymermatrix nicht mehr seine ursprüngliche kugelförmige Gestalt aufweist, sondern länglich elipsoid erscheint. Das Mattierungsmittel scheint dabei zumindest teilweise in der thermoplastischen Matrix gelöst oder in diese eingequollen zu sein. Anders als bei vergleichsweise stärker vernetzten Mattierungsmitteln des Standes der Technik, die in der Polymermatrix ihre kugelförmige Gestalt nahezu beibehalten und auf die Weise einen groben Matteffekt bewirken, erhält man mit der erfindungsgemäßen Formmasse Formkörper mit sehr feiner seidenmatter Oberflächenstruktur. Hinzu kommt, daß sich mechanische Eigenschaften wie z. B. die Zugfestigkeit oder Weiterreißfestigkeit verbessern. Die Haptik der Oberflächen wird von Versuchspersonen als ausgesprochen angenehm empfunden.

### Ausführung der Erfindung

Die Erfindung betrifft eine Formmasse, enthaltend
a) 50 bis 99,9, bevorzugt 75 bis 95, insbesondere 80 bis 90 Gew.-% einer Matrix aus einem thermoplastischen Kunststoff und
b) 0,1 bis 50, bevorzugt 5 bis 25, insbesondere 10 bis 20 Gew.-% eines in der Matrix verteilten Mattierungsmittels in Form eines (Meth)acrylatcopolymeren.

### Die Matrix a)

Die Matrix a) kann aus einem Polymethylmethacrylat, einem schlagzäh modifiziertem Polymethylmethacrylat, einem Polycarbonat, einem Polystyrol, einem Acrylsäureester/Styrol/Acrylnitril-Pfropfcopolymer (ASA), einem Styrol-Acryl-Nitril (SAN), einem Polyester, einem Polyethylentherephthalat (PET), einem glycolmodifiziertem Polyethylentherephthalat (PETG), einem Polybutylenterephthalat-Kunststoff (PBT), einem Polyvinylchlorid-Kunststoff (PVC), einem Polyolefin-Kunststoff, einem Cycloolefincopolymeren (COC), einem Acrylnitril-Butadien-Stryrol (ABS) oder Mischungen (Blends) verschiedener thermoplastischer Kunststoffe besteht.

Bevorzugt sind Polymethylmethacrylate bzw. schlagzäh modifizierte Polymethylmethacrylat-Kunststoffe.

### Polymethylmethacrylat-Kunststoffe

Unter Polymethylmethacrylat-Kunststoffen werden Homopolymer oder Copolymer aus mindestens 80 Gew.-% Methylmethacrylat und gegebenenfalls bis zu 20 Gew.-% weiteren mit Methylmethacrylat copolymerisierbaren Monomeren verstanden. Insbesondere bestehen Polymethylmethacrylat-Kunststoffe aus 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5 - 10 Gew.-% aus weiteren radikalisch polymerisierbaren Comonomeren, z. B. C₁- bis C₄-Alkyl(meth)acrylaten, insbesondere Methylacrylat, Ethylacrylat oder Butylacrylat. Vorzugsweise liegt das mittlere Molekulargewicht M_{w} (Gewichtsmittel) der Matrix im Bereich von 90.000 g/mol bis 200.000 g/mol, insbesondere 100.000 g/mol bis 150.000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 90 bis 99,5 Gew.-% Methylmethacrylat und 0,5 bis 10 Gew.-% Methylacrylat. Die Vicaterweichungstemperaturen VET (ISO 306-B50) können im Bereich von mindestens 90, bevorzugt von 95 bis 112 °C liegen.

### Schlagzähmodifizierungsmittel für Polymethylmethacrylate

Die Matrix a) kann ein schlagzähmodifiziertes Polymethylmethacrylat sein, welches ein zwei- oder dreischalig aufgebautes Schlagzähmodifizierungsmittel enthält.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

### Polymethacrylat-Matrix

Die schlagzähe Formmasse besteht zu 70 - 99 Gew.-% aus einer Matrix, die zu 80 bis 100, vorzugsweise zu 90 - 98 Gew.-%, aus radikalisch polymerisierten Methylmethacrylat-Einheiten und gegebenenfalls zu 0 - 20, bevorzugt zu 2 - 10 Gew.-% aus weiteren radikalisch polymerisierbarern Comonomeren, z. B. C₁-bis C₄-Alkyl(meth)acrylaten, insbesondere Methylacrylat, Ethylacrylat oder Butylmethacrylat. Vorzugsweise liegt das mittlere Molekulargewicht M_{w} der Matrix im Bereich von 90.000 g/mol bis 200.000 g/mol, insbesondere 100.000 g/mol bis 150.000 g/mol.

### Schlagzähmodifizierunctsmittel

In der Polymethacrylat-Matrix sind 1 bis 30, bevorzugt 2 bis 20, besonders bevorzugt 3 bis 15, insbesondere 5 bis 12 Gew.-% eines Schlagzähmodifizierungsmittels, das eine Elastomerphase aus vernetzten Polymerisatteilchen ist, enthalten. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei-, besonders bevorzugt einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen dieser Emulsionspolymerisate liegen im Bereich von 100 - 500 nm, bevorzugt 200 - 400 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-% , besonders bevorzugt im Bereich von 25 bis 35 Gew.-%.

### Schlagzähmodifizierte Polymethacrylat-Formmassen

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten oder Spritzgußteilen weiterverarbeitet werden.

### Kerbschlagzähigkeiten und Fließfähigkeit des Standes der Technik

Formkörper aus handelsüblichen schlagzähmodifizierte Polymethacrylat-Formmassen weisen Kerbschlagzähigkeiten KSZ nach Charpy gemäß ISO 179/1 eA im Bereich von 3,0 KJ/m² bis 5,0 KJ/m² auf.

Handelsübliche schlagzähmodifizierte Polymethacrylat-Formmassen weisen Fließfähigkeiten MVR (230 °C/3,8 kg) im Bereich von 0,4 bis 8,1 cm³/10min nach ISO 1133 auf. Die Fließfähigkeit schlagzähmodifizierter Polymethacrylat-Formmassen soll insbesondere für die Spritzgießverarbeitung möglichst hoch sein. Auf Fließfähigkeit optimierte, schlagzähmodifizierte Polymethacrylat-Formmassen erreichen MVR-Werte (230 °C/3,8 kg, ISO 1133) im Bereich von maximal ca. 10,0 cm³/10min.

### Zweiphasiger Schlagzähmodifier gemäß EP 0 528 196 A1

Bevorzugt, insbesondere zur Folienherstellung, jedoch nicht auf diese beschränkt, wird eine, im Prinzip aus EP 0 528 196 A1 bekannte Matrix a) verwendet, die ein zweiphasiges, schlagzähmodifiziertes Polymerisat ist aus:
a1) 10 bis 95 Gew.-% einer zusammenhängenden Hartphase mit einer Glasübergangstemperatur *T*_{mg} über 70 °C, aufgebaut aus
   a11) 80 bis 100 Gew.-% (bezogen auf a1) Methylmethacrylat und
   a12) 0 bis 20 Gew.-% eines oder mehrerer weiterer ethylenisch ungesättigter, radikalisch polymerisierbarer Monomeren, und
a2) 90 bis 5 Gew.-% einer in der Hartphase vorteilten Zähphase mit einer Glasübergangstemperatur *T*_{mg} unter -10 °C, aufgebaut aus
   a21) 50 bis 99,5 Gew.-% eines C₁-C₁₀-Alkylacrylats (bezogen auf a2)
   a22) 0,5 bis 5 Gew.-% eines vernetzenden Monomeren mit zwei oder mehr ethylenisch ungesättigten, radikalisch polymerisierbaren Resten, und
   a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50, vorzugsweise zu mehr als 80 Gew.-%, aus niederen Alkylacrylaten aufgebaut ist, woraus sich eine Glasübergangstemperatur *T*_{mg} dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1-20 Kohlenstoffatomen, sofern noch nicht genannt, sein, wobei der Alkylrest linear, verzweigt oder cyclisch sein kann. Desweiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse A führen.
Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit U₈₀ der Teilchengröße unter 0,5, (U₈₀ wird aus einer integralen Betrachtung der Teilchengrößenverteilung, die per Ultrazentrifuge bestimmt wird, ermittelt. Es gilt: U₈₀ = [(r₉₀ - r₁₀) / r₅₀] - 1, wobei r₁₀, r₅₀, r₉₀ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 bis 0,05 Gew.-% organischem Hydroperoxid und 0,05 bis 0,15 Gew.-% Natriumhydroxymethylsulfinat , bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

In einer bevorzugten Ausführungsform enthält die Hartphase niedermolekulare und/oder einpolymerisierte UV-Absorber in Mengen von 0,1 bis 10 Gew.-%, bevorzugt 0,5 - 5 Gew.-%, bezogen auf A als Bestandteil der comonomeren Komponenten a12) in der Hartphase. Beispielhaft für die polymerisierbaren UV-Absorber, wie sie u.a. in der US 4 576 870 beschrieben sind, seien 2-(2'-Hydroxyphenyl)-5-methacrylamidobenzotriazol oder 2-Hydroxy-4-methacryloxybenzophenon genannt. Niedermolekulare UV-Absorber können beispielsweise Derivate des 2-Hydroxybenzophenons oder des 2-Hydroxyphenylbenzotriazols oder Salicylsäurephenylester sein. Im allgemeinen weisen die niedermolekularen UV-Absorber ein Molekulargewicht von weniger als 2 x 10³ (g/mol) auf. Besonders bevorzugt sind UV-Absorber mit geringer Flüchtigkeit bei der Verarbeitungstemperatur und homogener Mischbarkeit mit der Hartphase a1) des Polymerisats A.

### Das Mattierungsmittel b)

Das Mattierungsmittel b) ist ein (Meth)acrylatcopolymer, welches aus den folgenden Monomeren hergestellt wird:
b1) 50 bis 95, bevorzugt 50 bis 90 Gew.-% Methylmethacrylat
b2) 5 bis 50, bevorzugt 10 bis 50 Gew.-% C₁- bis C₆-Alkylacrylaten, insbesondere Methylacrylat, Ethylacrylat, Propylacrylat, Butylacrylat und/oder Hexylacrylat
b3) 0,01 bis weniger als 0,5, bevorzugt 0,05 bis 0,49 insbesondere 0,1 bis 0,4 Gew.-% eines vernetzenden Monomeren und/oder Pfropfvernetzers mit zwei oder mehr ethylenisch ungesättigten, radikalisch polymerisierbaren Resten,
   Vernetzende Monomere b3) können z. B. (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und -tetramethacrylat sein.
b4) 0 bis 20, bevorzugt 0 bis 5 Gew.-% eines oder mehrerer weiterer, nicht vernetzender, ethylenisch ungesättigter, radikalisch polymerisierbarer Monomere, wie z. B. C₁-C₄-Alkyl(meth)acrylaten, wie Methylacrylat, Ethylacrylat ,Butylacrylat, Iso-Butylmethacrylat oder n-Butylmethacrylat, oder anderen vinylisch polymerisierbaren Monomeren wie z. B. Styrol. Besonders bevorzugt sind jedoch weniger als 2 Gew.-% oder keine weiteren Monomere b4) enthalten.

Die Bestandteile b1) und b2) sowie gegebenenfalls b3) und/oder b4) addieren sich zu 100 Gew.-%.

Das Mattierungsmittel kann günstigerweise ein mittleres Molekulargewicht M_{w} (Gewichtsmittel) von mindestens 200.000, bevorzugt mindestens 250.000 (g/mol) aufweisen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989). Mit steigendem Vernetzeranteil steigt das Molekulargewicht stark an. Während sich das Molekulargewicht im unvernetzten Zustand noch leicht und sehr genau bestimmen lässt, wird eine genaue Bestimmung bei steigendem Vernetzungsgrad zunehmend schwieriger. Ist das Molekulargewicht extrem hoch, kann es meist nur noch grob abgeschätzt werden. Das Molekulargewicht kann bei Vernetzung mehrerer linearer Molekülketten miteinander praktisch gegen unendlich steigen und letztlich nicht mehr exakt faßbar sein. Es ist jedoch immer möglich festzustellen, ob das Molekulargewicht oberhalb der angegeben Werte von mindestens 200.000, bevorzugt mindestens 250.000 (g/mol) liegt. Dies kann z. B. durch zusätzliche Löse- oder Extraktionsversuche mit anschließender Analyse der Bestandteile z. B. Gelpermeationschromatograhie festgestellt werden.

Das Mattierungsmittel weist eine Glasübergangstemperatur *T*_{mg} von mindestens 20 °C auf. Unter Glasübergangstemperatur wird hier insbesondere die midpoint temperature *T*_{mg} nach ISO 11357-2, Punkt 3.3.3, verstanden. Die Messung erfolgt ohne Weichmacherzusatz, bei Restmonomergehalten (REMO) von weniger als 100 ppm, bei einer Aufheizrate von 10 °C/min und unter Stickstoffatmosphäre.

Das Mattierungsmittel b) kann insbesondere ein Copolymerisat sein aus
50 bis 90, bevorzugt 60 bis 80 Gew.-% Methylmethacrylat
10 bis 50, bevorzugt 20 bis 40 Gew.-% Ethylacrylat und/oder Butylacrylat
0,01 bis weniger als 0,5, bevorzugt 0,1 bis 0,4 Gew.-% eines vernetzenden Monomeren und/oder Pfropfvernetzers mit zwei oder mehr ethylenisch ungesättigten, radikalisch polymerisierbaren Resten,
besonders bevorzugt Ethylenglycoldimethacrylat.

### Herstellung des Mattierungsmittels

Das Mattierungsmittel b) wird mittels Emulsionspolymerisation hergestellt und weist, vor Einarbeitung in die Matrix a), eine mittlere Teilchengröße im Bereich von 100 nm bis 10, bevorzugt von 1 bis 5 µm auf. Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind. Ein weiteres Verfahren zur Ermittlung der Teilchengröße sowie der Teilchengrößenverteilung ist Analyse mit der Ultrazentrifuge. Bei dieser Methode kann aus der Sedimentation der Teilchen unter Einfluß der Zentrifugalkraft mit Hilfe der Stokes-Gleichung und der Mie'schen Streugesetze die Teilchengröße und die Teilchengrößenverteilung ermittelt werden (siehe z. B. H. F. Mark et al., Encyclopedia of Polymer Science and Engineering, 2nd. Edition, Vol. 17., J. Wiley, New York 1989).

Zunächst wird eine Dispersion in an sich bekannter Weise durch wäßrige Emulsionspolymerisation im Batch- oder im Zulaufverfahren, halbkontinuierlich oder auch kontinuierlich gewonnen (s. dazu z.B. DE 195 03 099 A1). Vorteilhafterweise kann die Teilchengröße durch den Einsatz eines Saatlatex gesteuert werden. Die radikalische Polymerisation der Monomeren in Gegenwart eines Emulgators erfolgt mittels radikalbildender wasserlöslicher Polymerisationsinitiatoren, bei denen die Radikalbildung thermisch oder über Redoxprozesse erfolgen kann. Bevorzugt wird kein Molekulargewichtsregler zugesetzt.

Das Mattierungsmittel b) wird aus der Dispersion durch Abtrennen des Wasser mittels Fällungsverfahren, Gefrierkoagulation, Sprühtrocknung oder durch Entwässern in einem Doppelschneckenextruder gewonnen.

EP-A 0 683 028 beschreibt ein Verfahren zum Entwässern eines zweiphasigen flüssigen Gemischs aus einer thermoplastischen Kunststoffschmelze und einer Wasserphase in einem gegenläufigen Doppelschneckenextruder. Dabei kann die Koagulation des Kunststoff-Latex direkt im Extruder unter der Scherwirkung in der Koagulationszone bei einer Temperatur im thermoplastischen Bereich des Kunststoffs erfolgen. Die Schmelze wird dabei in teilgefüllten Schneckengängen gefördert und in wenigstens einem dieser Schneckengänge unter Bildung eines örtlich eng begrenzten, steilen Druckgradienten zu einem zusammenhängenden Schmelzekuchen gestaut. Auf diese Weise fließt das Wasser vor der Grenze des Schmelzekuchens unter Wirkung der Schwerkraft derart nach unten, daß der Schmelzekuchen nicht mit einer zusammenhängenden Wasserphase in Berührung steht. Unter Anwendung dieses Verfahrens kann der Wassergehalt eines Emulsionspolymerisats mit einem Ausgangs-Wasseranteil von 55 Gew.-% beispielsweise auf nur noch 8 Gew.-% Wasser reduziert werden. In einem Entgasungsextruder können anschließend die Restmengen an flüchtigen Anteilen durch eine Vorwärts- und Rückwärts-Entgasungszone weitgehend abgetrennt werden. Das an der Granulierdüse abgenommene Granulat hat schließlich eine Restfeuchte von nur noch ca. 0,06 Gew.-%.

DE 197 18 597 C1 beschreibt ein Verfahren zum Entwässern eines zweiphasigen flüssigen Gemischs aus einer thermoplastischen Kunststoffphase und einer Wasserphase durch Koagulation des zweiphasigen flüssigen Gemischs in einem ersten Extruder, Entwässerung des Koagulats in einem Doppelschneckenextruder mit gegenläufigen Schnecken mit einer Entwässerungszone und Abtrennen flüchtiger Bestandteile durch Entgasung wobei als erster Extruder ein Einschneckenextruder oder ein Doppelschneckenextruder eingesetzt wird, wobei der Doppelschneckenextruder mit gleichlaufenden Schnecken ausgestattet ist. Es können niedrige Restpolymergehalte im Abpreßwasser im Bereich von ca. 0,35 Gew.-% erhalten werden.

### Formmasse

Die erfindungsgemäße Formmasse kann in an sich bekannter Weise durch Vermengen der Matrix a) und des Mattierungsmittels b) im Schmelzezustand z. B. in einem Extruder, bevorzugt einem Doppelschneckenextruder, Austragen und Abkühlen des Extrudats und anschließende Granulierung, erhalten werden.

Die erfindungsgemäße Formmasse zeichnet sich insbesondere dadurch aus, daß ein daraus hergestellter normgerechter Probekörper Rauigkeitsgrößen nach DIN 4768 im Bereich von Rₐ = 0,1 bis 0,5, insbesondere 0,2 bis 0,4 µm, R_{z} = 0,5 bis 5,0, insbesondere 1,0 bis 3,0, z. B. 2,0 bis 2,5 µm und Rₘₐₓ = 0,5 bis 5,0, insbesondere 1,0 bis 4,0, z. B. 2,0 bis 3,5 µm aufweist.

### Formkörper

Aus der erfindungsgemäße Formmasse können sich bekannter Weise Formkörper mittels Extrusion oder Spritzguß hergestellt werden.

Bei dem Formkörper kann es sich z. B. um eine Folie, eine ebene Platte, eine Wellplatte, eine Stegmehrfachplatte, ein Rohr, einen Stab oder um ein beliebig geformtes Spritzgussteil handeln.

### Verwendungen von Folien

Aus der Formmasse hergestellte Folien können zur Co-Lamination mit einem weiteren, optional bedruckten Folienmaterial, zum Hinterspritzen mit einem Kunststoffmaterial, z. B. beim Insert-Moulding-Verfahren, zum Hinterschäumen, mit einem Kunststoffschaum, z. B. mit Polyurethanschaum, zum Extrusionskaschieren oder zum Kaschieren von beliebigen Substraten, z. B. Innenteilen von Kraftfahrzeugen oder Flugzeugen verwendet werden.

### BEISPIELE

### Abkürzungen:

- MMA: = Methylmethacrylat
- EA: = Ethylacrylat
- EGDMA: = Ethylenglycoldimethacrylat (Vernetzer)
- APS: = Ammoniumpersulfat (Initiator)
- Emulg.: = Natriumsalz von C15-Paraffinsulfonat
- r₅₀: = Mittlerer Teilchenradius ermittelt durch Ultrazentrifugation
- Saatlatex: = Saatlatex, der aus Isobutylmethacrylat, MMA und Ethylenglycoldimethacrylat (47,5:47,5:5,0) besteht, einen Feststoffgehalt von 20 Gew.-% und einen Teilchenradius von r₅₀ ~ 0,2 µm aufweist. Die Herstellung ist in EP 0 528 196 A1 beschrieben (Dispersion I des Polymerisats B im angegebenen Beispiel).
- Matrix: = Schlagzähe Formmasse, die aus einer thermoplastischen Matrix und einer darin dispergierten Zähphase besteht. Die Herstellung ist in EP 0 528 196 A1 beschrieben (Polymersiat A im angegebenen Beispiel).

### Herstellung der Dispersionen

Bei 80°C (Regelung der Kessel-Innentemperatur) wird unter Rühren voll entsalztes Wasser im Polymerisationskessel vorgelegt und mit der angegebenen Menge Saatlatex sowie mit APS gelöst in Wasser versetzt. Nach 5 min wird der Zulauf der Monomeremulsion in der angegebenen Zusammensetzung begonnen und 10 min durchgeführt. Dann wird er für weitere 10 min unterbrochen (Intervallzulauf). Anschließend wird die restliche Emulsion mit der gleichen konstanten Förderleistung wie beim ersten Zulaufintervall innerhalb von 4 h in den Reaktor dosiert. 120 min nach Zulaufende wird auf 35°C abgekühlt und über DIN 100 Siebgewebe filtriert.

| | **Beispiel 1** | **Beispiel 2** | **Beispiel 3** |
|---|---|---|---|
| Vorlage | | | |
| VE-Wasser | 1103 g | 1063 g | 1063 g |
| Saatlatex | 240 g | 240 g | 240 g |
| APS | 1,16 g in | 1,16 g in | 1,16 g in |
| | 20 g Wasser | 68 g Wasser | 68 g Wasser |

| Zulauf | | | |
|---|---|---|---|
| Wasser | 3617g | 3617 g | 3617 g |
| Emulgator | 2,92 g | 2,92 g | 2,92 g |
| APS | 7,04 g | 7,04 g | 7,04 g |
| MMA | 1831 g | 1627 g | 1423 g |
| EA | 204 g | 408 g | 612 g |
| EGDMA | 5,10 g | 5,10 g | 5,10 g |

| Analysen | | | |
|---|---|---|---|
| Feststoffgehalt: | 29,0 % | 29,7 % | 29,7 % |
| Koagulat: | 0,1 % | 0,11 % | 0,06 % |
| r₅₀ | 0,79 µm | 0,75 µm | 0,76 µm |

### Eigenschaften

Die Dispersionen werden gefrierkoaguliert und getrocknet. Das Koagulat wird anschließend mit der schlagzähen Formmasse zu einem 50%igen Konzentrat compoundiert. Dieses Compound wird nochmals mit der entsprechenden Menge abgemischt, so daß 15 Gew.-% Mattierungsmittel enthalten sind, (Trockenmischung der Granulate) und zu ca. 70 µm dicken Folien extrudiert.

In der unten stehenden Tabelle sind neben den Rauhtiefemessungen auch Haze-Werte wiedergegeben, die an den Folien gemessen wurden. Da der Haze bei 70 µm dicken Proben überwiegend von der Oberflächenstreuung herrührt, ist der Haze-Wert ein guter Indikator für Oberflächenrauhigkeit.

| **Beispiel** | **Vergleichsbeispiel** | **1** | **2** | **3** |
|---|---|---|---|---|
| Mattierungs -mittel [Gew.-%] | ohne | 15 | 15 | 15 |
| Ethylacrylat-Anteil [Gew.-%] | - | 10 | 20 | 30 |
| Mittenrauhwert ^{a)} Rₐ [µm] | 0,10 | 0,12 | 0,21 | 0,39 |
| gemittelte Rauhtiefe ^{a)} R_{z} [µm] | 0,33 | 0,63 | 0,90 | 2,27 |
| max. Rauhtiefe ^{a)} Rmax [µm] | 0,49 | 0,72 | 1,12 | 2,57 |
| Haze [%] ASTM D1003 | 1,2 | 17,2 | 28,3 | 39,9 |
| Visuelle Beurteilung | glänzend | geringer Matteffekt | mittlerer Matteffekt | guter Matteffekt |

| | | | | |
|---|---|---|---|---|
| a) Rauhtiefemessung: Angegeben sind die Messungen an den Oberseiten, die Unterseiten wiesen ähnliche Rauhigkeiten auf. | | | | |

Sowohl die Rauhtiefemessungen als auch die Hazemessung belegen die eindeutige Wirkung des Co-Acrylatanteils im Mattierungsmittel. Man erkennt, dass bei ungefähr gleichbleibendem Teilchenradius und gleicher Einsatzmenge in der Formmasse die Rauhigkeit mit steigendem Co-Acrylatanteil deutlich zunimmt.

## Patentansprüche

1. Formmasse, enthaltend
a) 50 bis 99,9 Gew.-% einer Matrix aus einem thermoplastischen Kunststoff und
b) 0,1 bis 50 Gew.-% eines in der Matrix verteilten Mattierungsmittels in Form eines (Meth)acrylatcopolymeren,
**dadurch gekennzeichnet, daß**
das Mattierungsmittel ein (Meth)acrylatcopolymer ist, das aus den folgenden Monomeren hergestellt ist:
b1) 50 bis 95 Gew.-% Methylmethacrylat
b2) 5 bis 50 Gew.-% C₁- bis C₆-Alkylacrylaten
b3) 0,01 bis weniger als 0,5 Gew.-% eines vernetzenden Monomeren und/oder Pfropfvernetzers mit zwei oder mehr ethylenisch ungesättigten, radikalisch polymerisierbaren Resten,
b4) 0 bis 20 Gew.-% eines oder mehrerer weiterer, nicht vernetzender ethylenisch ungesättigter, radikalisch polymerisierbarer Monomeren,
wobei sich die Bestandteile b1) und b2) sowie gegebenenfalls b3) und/oder b4) zu 100 Gew.-% addieren und das Mattierungsmittel eine Glasübergangstemperatur *T*_{mg} von mindestens 20 °C aufweist und wobei das Mattierungsmittel b) durch Emulsionspolymerisation hergestellt wurde und vor Einarbeitung in die Matrix einen mittleren Teilchenradius im Bereich von 100 nm bis 10 µm aufweist.

2. Formmasse nach Anspruch 1, **dadurch gekennzeichnet, daß** die Matrix a) aus einem Polymethylmethacrylat, einem schlagzäh modifiziertem Polymethylmethacrylat, einem Polycarbonat, einem Polystyrol, einem Acrylsäureester/Styrol/Acrylnitril-Pfropfcopolymer (ASA), einem Styrol-Acryl-Nitril (SAN), einem Polyester, einem Polyethylentherephthalat (PET), einem glycolmodifiziertem Polyethylentherephthalat (PETG), einem Polybutylenterephthalat-Kunststoff (PBT), einem Polyvinylchlorid-Kunststoff (PVC), einem Polyolefin-Kunststoff, einem Cycloolefincopolymeren (COC), einem Acrylnitril-Butadien-Stryrol (ABS) oder Mischungen (Blends) verschiedener thermoplastischer Kunststoffe besteht.

3. Formmasse nach Anspruch 1 oder 2, **dadurch gekennzeichnet, daß** die Matrix a) ein schlagzähmodifiziertes Polymethylmethacrylat ist, welches ein zwei- oder dreischalig aufgebautes Schlagzähmodifizierungmittel enthält.

4. Formmasse nach einem oder mehreren der Ansprüche 1 bis 3, **dadurch gekennzeichnet, daß** die Matrix a) ein schlagzähmodifiziertes Polymerisat ist, bestehend aus:
a1) 10 bis 95 Gew.-% einer zusammenhängenden Hartphase mit einer Glasübergangstemperatur *T*_{mg} über 70 °C, aufgebaut aus
a11) 80 bis 100 Gew.-% (bezogen auf a1) Methylmethacrylat und
a12) 0 bis 20 Gew.-% eines oder mehrerer weiterer ethylenisch ungesättigter, radikalisch polymerisierbarer Monomerer, und
a2) 90 bis 5 Gew.-% einer in der Hartphase vorteilten Zähphase mit einer Glasübergangstemperatur *T*_{mg} unter -10 °C, aufgebaut aus
a21) 50 bis 99,5 Gew.-% eines C₁-C₁₀-Alkylacrylats (bezogen auf a2)
a22) 0,5 bis 5 Gew.-% eines vernetzenden Monomeren mit zwei oder mehr ethylenisch ungesättigten, radikalisch polymerisierbaren Resten, und
a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind

5. Formmasse nach einem oder mehreren der Ansprüche 1 bis 4, **dadurch gekennzeichnet, daß** das Mattierungsmittel b) ein Copolymerisat ist aus
50 bis 90 Gew.-% Methylmethacrylat
10 bis 50 Gew.-% Ethylacrylat und/oder Butylacrylat
0,01 bis weniger als 0,5 Gew.-% eines vernetzenden Monomeren und/oder Pfropfvernetzers mit zwei oder mehr ethylenisch ungesättigten, radikalisch polymerisierbaren Resten

6. Formmasse nach einem oder mehreren der Ansprüche 1 bis 4, **dadurch gekennzeichnet, daß** man als vernetzenden Monomer Ethylenglycoldimethacrylat verwendet.

7. Formmasse nach einem oder mehreren der Ansprüche 1 bis 6, **dadurch gekennzeichnet, daß** ein daraus hergestellter Probekörper Rauigkeitsgrößen nach DIN 4768 im Bereich von Rₐ = 0,1 bis 0,5 *µ*m, R_{z} = 0,5 bis 5,0 *µ*m und Rₘₐₓ = 0,5 bis 5,0 *µ*m aufweist.

8. Verfahren zur Herstellung einer Formmasse nach einem oder mehreren der Ansprüche 1 bis 7 in an sich bekannter Weise durch Vermengen der Matrix und des Mattierungsmittels im Schmelzezustand in einem Extruder, Austragen und Abkühlen des Extrudats und anschließende Granulierung.

9. Formkörper, herstellbar in an sich bekannter Weise mittels Extrusion oder Spritzguß aus einer Formmasse nach einem oder mehreren der Ansprüche 1 bis 7.

10. Formkörper nach Anspruch 9, **dadurch gekennzeichnet, daß** es sich um eine Folie, eine ebene Platte, eine Wellplatte, eine Stegmehrfachplatte, ein Rohr, einen Stab oder um ein beliebig geformtes Spritzgussteil handelt.

11. Verwendung einer aus der Formmasse nach einem oder mehreren der Ansprüche 1 bis 7 hergestellten Folie zur Co-Lamination mit einem weiteren, optional bedruckten Folienmaterial, zum Hinterspritzen mit einem Kunststoffmaterial, zum Hinterschäumen mit einem Kunststoffschaum, zum Extrusionskaschieren oder zum Kaschieren von beliebigen Substraten.

## Claims

1. Moulding composition, comprising
a) from 50 to 99.9% by weight of a matrix composed of a thermoplastic polymer and
b) from 0.1 to 50% by weight of a matting agent in the form of a (meth)acrylate copolymer dispersed in the matrix,
**characterized in that**
the matting agent is a (meth)acrylate copolymer which has been prepared from the following monomers,
b1) from 50 to 95% by weight of methyl methacrylate
b2) from 5 to 50% by weight of C₁-C₆-alkyl acrylates
b3) from 0.01 to less than 0.5% by weight of a crosslinking monomer and/or graft-linking agent having two or more ethylenically unsaturated radicals capable of free-radical polymerization,
b4) from 0 to 20% by weight of one or more other, non-crosslinking ethylenically unsaturated monomers capable of free-radical polymerization,
where the entirety of the constituents b1) and b2) and, where appropriate, b3) and/or b4) gives 100% by weight, and the glass transition temperature *T*_{mg} of the matting agent is at least 20°C, and where the matting agent b) has been prepared via emulsion polymerization, and, prior to incorporation into the matrix, has a median particle radius in the range from 100 nm to 10 µm.

2. Moulding composition according to Claim 1, **characterized in that** the matrix a) is composed of a polymethyl methacrylate, of an impact-modified polymethyl methacrylate, of a polycarbonate, of a polystyrene, of an acrylate-styrene-acrylonitrile graft copolymer (ASA), of a styrene-acrylonitrile (SAN), of a polyester, of a polyethylene terephthalate (PET), of a glycol-modified polyethylene terephthalate (PETG), of a polybutylene terephthalate plastic (PBT), of a polyvinyl chloride plastic (PVC), of a polyolefin plastic, of a cycloolefin copolymer (COC), of an acrylonitrile-butadiene-styrene (ABS) or of a mixture (blend) of various thermoplastics.

3. Moulding composition according to Claim 1 or 2, **characterized in that** the matrix a) is an impact-modified polymethyl methacrylate which comprises an impact modifier whose structure has two or three layers.

4. Moulding composition according to one or more of Claims 1 to 3, **characterized in that** the matrix a) is an impact-modified polymer, composed of:
a1) from 10 to 95% by weight of a coherent hard phase whose glass transition temperature *T*_{mg} is above 70°C, composed of
a11) from 80 to 100% by weight (based on a1) of methyl methacrylate and
a12) from 0 to 20% by weight of one or more other ethylenically unsaturated monomers capable of free-radical polymerization, and
a2) from 90 to 5% by weight of a tough phase dispersed within the hard phase and having a glass transition temperature *T*_{mg} below -10°C, composed of
a21) from 50 to 99.5% by weight of a C₁-C₁₀-alkyl acrylate (based on a2)
a22) from 0.5 to 5% by weight of a crosslinking monomer having two or more ethylenically unsaturated radicals capable of free-radical polymerization, and
a23) where appropriate, other ethylenically unsaturated monomers capable of free-radical polymerization,
where at least 15% by weight of the hard phase a1) has covalent linking to the tough phase a2).

5. Moulding composition according to one or more of Claims 1 to 4, **characterized in that** the matting agent b) is a copolymer composed of
from 50 to 90% by weight of methyl methacrylate from 10 to 50% by weight of ethyl acrylate and/or butyl acrylate
from 0.01 to less than 0.5% by weight of a crosslinking monomer and/or graft-linking agent having two or more ethylenically unsaturated radicals capable of free-radical polymerization.

6. Moulding composition according to one or more of Claims 1 to 4, **characterized in that** ethylene glycol dimethacrylate is used as crosslinking monomer.

7. Moulding composition according to one or more of Claims 1 to 6, **characterized in that** a test specimen produced therefrom has roughness variables to DIN 4768 in the range Rₐ = from 0.1 to 0.5 µm, R_{z} = from 0.5 to 5.0 µm and Rₘₐₓ = from 0.5 to 5.0 µm.

8. Process for preparing a moulding composition according to one or more of Claims 1 to 7 in a manner known per se via mixing of the matrix and of the matting agent in the molten state in an extruder, discharging and cooling of the extrudate and then pelletizing of the material.

9. Moulding which can be produced in a manner known per se by means of extrusion or injection moulding from a moulding composition according to one or more of Claims 1 to 7.

10. Moulding according to Claim 9, **characterized in that** it is a film, a flat sheet, a corrugated sheet, a multiple-web sandwich panel, a pipe, a rod or an injection-moulded part of any desired shape.

11. Use of a film produced from the moulding composition according to one or more of Claims 1 to 7 for co-lamination to another, optionally printed film material, for back-moulding with a plastics material, for back-foaming with a plastics foam, for extrusion lamination or for the lamination of any desired substrates.

## Revendications

1. Matière à mouler contenant :
(a) de 50 à 99,9 % en poids d'une matrice en une matière plastique thermoplastique et
(b) de 0,1 à 50 % en poids d'un agent de matage réparti dans la matrice sous la forme d'un copolymère (méth)acrylate,
**caractérisée en ce que** :
l'agent de matage est un copolymère (méth)acrylate fabriqué à partir des monomères suivants :
b1) de 50 à 95 % en poids de méthylméthacrylate
b2) de 5 à 50 % en poids d'alkyle acrylate en C₁ à C₆
b3) de 0,01 à moins de 0,5 % en poids d'un monomère réticulant et/ou d'un agent réticulant de greffage avec deux radicaux ou plus polymérisables de manière radicalaire, insaturés en éthylène,
b4) de 0 à 20 % en poids d'un ou plusieurs autres monomères polymérisables de manière radicalaire, insaturés en éthylène, non réticulants
les composants b1) et b2) ainsi que le cas échéant b3) et/ou b4) s'additionnant jusqu'à 100 % en poids et l'agent de matage présentant une température de transition vitreuse *T_{mg}* d'au moins 20°C et l'agent de matage b) ayant été fabriqué par polymérisation d'émulsion, et présentant, avant son intégration dans la matrice, un rayon moyen de particules compris dans la plage allant de 100 nm à 10 µm.

2. Matière à mouler selon la revendication 1, **caractérisée en ce que** la matrice a) se compose d'un polyméthylméthacrylate, d'un polyméthylméthacrylate dont la résistance au choc a été modifiée, d'un polycarbonate, d'un polystyrène, d'un copolymère greffé acrylonitrile-styrène-ester acrylique (ASA), d'un styrène-acrylonitrile (SAN), d'un polyester, d'un polyéthylène téréphtalate (PET), d'un polyéthylène téréphtalate modifié glycol (PETG), d'un polybutylène téréphtalate (PBT), d'une matière plastique polychlorure de vinyle (PVC), d'une matière plastique polyoléfine, d'un copolymère de cyclooléfine (COC), d'un acrylonitrile-butadiène-styrène (ABS) ou de mélanges (blends) de différentes matières plastiques thermoplastiques.

3. Matière à mouler selon la revendication 1 ou 2, **caractérisée en ce que** la matrice a) est un polyméthylméthacrylate dont la résistance au choc a été modifiée, qui contient un agent de modification de la résistante au choc composé de deux ou trois couches.

4. Matière à mouler selon l'une quelconque ou plusieurs des revendications 1 à 3, **caractérisée en ce que** la matrice a) est un polymérisat dont la résistance au choc a été modifiée, se composant de :
a1) 10 à 95 % en poids d'une phase dure intégrée avec une température de transition vitreuse *T_{mg}* supérieure à 70°C, composée de :
a11) 80 à 100 % en poids (ramené à a1) de méthylméthacrylate et
a12) 0 à 20 % en poids d'un ou plusieurs autres monomères polymérisables de manière radicalaire, insaturés en éthylène, et
a2) de 90 à 5 % en poids d'une phase molle dispersée dans la phase dure avec une température de transition vitreuse *T_{mg}* inférieure à -10°C, composée de :
a21) 50 à 99,5 % en poids d'un alkyle acrylate en C₁ à C₁₀ (ramené à a2),
a22) 0,5 à 5 % en poids d'un monomère réticulant avec deux radicaux ou plus polymérisables de manière radicalaire, insaturés en éthylène, et
a23) le cas échéant, d'autres monomères polymérisables de manière radicalaire, insaturés en éthylène,
au moins 15 % en poids de la phase dure a1) étant lié de manière covalente à la phase molle a2).

5. Matière à mouler selon l'une quelconque ou plusieurs des revendications 1 à 4, **caractérisée en ce que** l'agent de matage b) est un copolymérisat, composé de :
50 à 90 % en poids de méthylméthacrylate
10 à 50 % en poids d'éthylacrylate et/ou de butylacrylate
0,01 à moins de 0,5 % en poids d'un monomère réticulant et/ou d'un agent réticulant de greffage avec deux radicaux ou plus polymérisables de manière radicalaire, insaturés en éthylène.

6. Matière à mouler selon l'une quelconque ou plusieurs des revendications 1 à 4, **caractérisée en ce que** l'on emploie, comme monomère réticulant, du diméthacrylate d'éthylène glycol.

7. Matière à mouler selon l'une quelconque ou plusieurs des revendications 1 à 6, **caractérisée en ce qu'**un échantillon fabriqué à partir de cette matière présente des valeurs de rugosité selon la norme DIN 4768 comprise dans une plage allant de Rₐ=0,1 à 0, 5 µm, R_{z}=0,5 à 5,0 µm et Rₘₐₓ=0,5 à 5,0 µm.

8. Procédé pour la fabrication d'une matière à mouler selon l'une quelconque ou plusieurs des revendications 1 à 7, d'une manière connue en soi, par mélange de la matrice et de l'agent de matage à l'état fondu dans une extrudeuse, la distribution et le refroidissement de l'extrudat et ensuite sa granulation.

9. Corps moulé qui peut être fabriqué d'une manière connue en soi par extrusion ou injection à partir d'une matière à mouler selon l'une quelconque ou plusieurs des revendications 1 à 7.

10. Corps moulé selon la revendication 9, **caractérisé en ce qu'**il s'agit d'une feuille, d'une plaque plane, d'une plaque ondulée, d'une plaque multicouche nervurée, d'un tuyau, d'une barre ou d'une pièce injectée de forme quelconque.

11. Utilisation d'une feuille, fabriquée à partir d'une matière à mouler selon l'une quelconque ou plusieurs des revendications 1 à 7, pour colaminage avec une autre feuille, éventuellement imprimée, pour surmoulage par injection avec une matière plastique, pour surmoulage par moussage avec une mousse plastique, pour gainage par extrusion ou pour gainage de substrats quelconques.
